# EUROPEAN PATENT SPECIFICATION

(11) **EP 4 496 021 B1**
(45) Date of publication and mention of the grant of the patent: **13.05.2026**
(21) Application number: 24189817.0
(22) Date of filing: 19.07.2024
(51) Int. Cl.: H01M 4/04, C09J 9/02, C09J 127/18, H01M 4/133, H01M 4/134, H01M 4/1393, H01M 4/38, H01M 4/62, H01M 4/583, H01M 4/1395, H01M 10/0525, H01M 4/02, C08F 120/06

(54) **METHOD OF MANUFACTURING DRY-PROCESSED ELECTRODE AND OBTAINED DRY-PROCESSED ELECTRODE**
VERFAHREN ZUR HERSTELLUNG EINER TROCKENVERARBEITETEN ELEKTRODE UND ERHALTENE TROCKENVERARBEITETE ELEKTRODE
PROCÉDÉ DE FABRICATION D'ÉLECTRODE TRAITÉE À SEC ET ÉLECTRODE TRAITÉE À SEC OBTENUE

(30) Priority: 19.07.2023 CN 202310886118
(43) Date of publication of application: 22.01.2025
(73) Proprietor: Eve Energy Co., Ltd., Huizhou, Guangdong 516006 (CN)
(72) Inventor: ZHOU, Siqiuyue, Huizhou, Guangdong, 516006 (CN); ZHAO, Linyan, Huizhou, Guangdong, 516006 (CN); JI, Yajuan, Huizhou, Guangdong, 516006 (CN); ZHAO, Ruirui, Huizhou, Guangdong, 516006 (CN)
(74) Representative: Murgitroyd & Company

(56) References cited:
- CN-A- 116 457 172
- US-A1- 2009 224 198
- US-A1- 2023 106 377

## Description

### BACKGROUND OF DISCLOSURE

### 1. Field of the Disclosure

The present disclosure relates to a technical field of batteries, and in particular to a method for manufacturing a dry-processed electrode and a resulting dry-processed electrode and use thereof.

### 2. Description of the Related Art

Thanks to economic globalization and ever-increasing requirements for carbon neutrality and environmental protection of various countries around the world, replacing traditional energy sources with new energy sources has become a strong development trend. Lithium ion batteries are increasingly indispensable in fields of power and energy storage, and have become the main force in a field of new energy sources.

With rapid development of lithium-ion battery technology and significant increase in market proportion, development of lithium-ion power batteries is increasingly moving towards low-cost, high-energy density, and fast charging technology. In terms of battery manufacturing, more attention is paid to resource costs, energy consumption, and recovery of volatile solvents. In terms of improving the energy density performance of the product, more attention is paid to thick electrode manufacturing and initial efficiency performance, and in terms of improving the rapid charging and power of the product, more attention is paid to rate characteristic of the battery.

For a manufacturing process of lithium battery cells, key performances of the cells are mainly determined by a manufacturing process of an electrode sheet. In the related art, the manufacturing methods of the electrode sheet are mainly classified as wet process (or slurry-based/solution process) and dry process (or solvent-free process), and the wet process is the mainstream. In the wet process, a binder, a solvent, and a conductive agent are generally prepared into a conductive slurry, and then the active substance is added in portions to stir, and finally the solvent is added to adjust the viscosity of the slurry. However, in a conventional wet process, dispersion of the conductive agent is poor. At the same solid content, the viscosity of the slurry is higher than that of the dry process, and internal resistance of the manufactured battery electrode sheet is also larger.

The dry-processed electrode technology is a new manufacturing process different from the wet method, basically does not use or uses a small amount of harmless solvent, and can increase compaction and manufacture a thick electrode, the dry-processed battery may increase energy density by more than 20%, and has more excellent kinetic characteristics, and in the thick electrode, cycle performance, impedance, and the like are preferable, so that the battery manufacturing cost and energy consumption may be greatly reduced, and battery performance may be greatly improved.

In the related art, a more feasible dry manufacturing process uses a fibrillizable PTFE binder, for example, PTFE, SP, and graphite are mixed and stirred, to obtain a premix; premix fibrillization, in which the premix is subjected to fibrillization treatment to obtain a fibrillized mixture; baking the mixture, and baking the fibrillized mixture to obtain a cotton candy-like mixture; the mixture is formed into a film, and the cotton candy-like mixture is repeatedly folded and subjected to multiple rolling treatments to obtain a thicker film sheet; a film sheet thinning process for thinning the thicker film sheet to obtain a negative electrode film sheet conforming to requirements for the thickness; the dry film-forming preparation process of the negative electrode and the negative electrode dry film have advantages of simple process, less waste of materials, and low labor and material cost, and may improve production efficiency and production performance.

For another example, a dry-processed electrode film is prepared by uniformly mixing an active material, a conductive agent, and a PTFE polymer film to obtain a mixture, performing fibrillization treatment to obtain a mixture, and then performing heating and rolling (or calendering) treatment. This method can greatly reduce the process difficulty of dry preparation of the electrode sheet by using a polymer film, and has low requirements for equipment used for the fibrillization, the fibrillization is more complete, and dispersion uniformity among components is better.

However, there is a problem that the PTFE binder is not tolerant in the negative electrode, and the C-F bond may react with lithium during charging, thereby consuming part of the lithium ions and reducing the initial efficiency of the battery, which resulting in capacity loss. Research in the related art mainly carries out PTFE modification or uses other binders to improve this problem. However, PTFE modification is mainly based on addition of fluorine-containing monomers to copolymerize with tetrafluoroethylene, and the side reaction of C-F bond with lithium is still present. Among other binders, the most commonly used are polymers with low melting points, such as PP, PE, etc. When the active material is melted and bonded under the temperature close to the melting point, the process is complicated, and the produced electrode sheet has a large thickness and poor flexibility.

US2009224198 discloses an electrochemical element electrode material comprising composite particle (a) comprising electrode active material, electric conductive material, and fluororesin (a) having a structure unit obtained by polymerizing tetrafluoroethylene and having a melting point of 200° C or higher, and amorphous polymer (b) not having a structure unit obtained by polymerizing tetrafluoroethylene and having a glass transition temperature of 180° C or lower.

US2023106377A1 discloses a method of manufacturing an electrode block for a solid-state battery including providing an electrode film with a current collector on a first side of the electrode film, coating a layer of dry electrolyte powder on a second side of the electrode film opposite the first side, and pressing the dry electrolyte powder coated on the electrode film to produce a solid electrolyte layer on the electrode film. US2023106377A1 further discloses a method of manufacturing an electrolyte film for a solid-state battery including preparing a powder mixture including at least one type of fibrillizable binder and at least one type of dry electrolyte powder, the at least one type of dry electrolyte powder being a majority of the powder mixture by weight, fibrillizing the at least one type of fibrillizable binder in the powder mixture by subjecting the powder mixture to a shear force, and pressing the powder mixture into a free-standing film.

CN116457172A discloses a method for producing self-supporting electrode membrane in wet process including providing an aqueous dispersion of a powder mixture of an active material and a binder polymer, drying and kneading the powder mixture into a malleable mass, and forming it into an electrode membrane by rolling.

In the production of the negative electrode sheet, it is easier to realize mass production through the dry process using the fibrillization of PTFE, and then large-scale industrialization is carried out. Therefore, in the dry-processed electrode technology, it is of great significance for improving the electric performance of the dry battery to study an electrode formulation and a corresponding new process, realize the PTFE modification in the electrode or the improvement of the surrounding environment, reduce the side reactions to improve the actual initial efficiency, and simultaneously improve falling off of active particles existing during a charging and discharging process under the pure PTFE process.

### SUMMARY

In a first aspect, embodiments of the present disclosure provide a method of manufacturing an electrode, the method includes the steps of: formulating a dispersion binder and an aqueous binder into a glue liquid; dry-mixing an active material, a conductive agent, and a main binder to obtain a first dry material; adding the glue liquid to the first dry material for dispersion, and performing a drying treatment to obtain a second dry material; pulverizing the second dry material to form a binder-fibrillized powder; and pressing the powder to obtain a dry-processed electrode. The step of formulating the dispersion binder and the aqueous binder into the glue liquid and the step of dry-mixing the active material, the conductive agent and the main binder to obtain the first dry material are in a non-sequential order.

In a second aspect, an embodiment of the present disclosure provides a dry-processed electrode obtained using the method according to the first aspect.

In a third aspect, an embodiment of the present disclosure provides a battery including the dry-processed electrode according to the second aspect.

The present disclosure provides following advantageous effects: in the manufacturing of the dry-processed electrode, the dispersion binder and the aqueous binder are used in combination with the main binder, so that the fibrillized main binder can be cladded, the surrounding environment of the main binder can be significantly improved, and further, the main binder can be protected from being reduced during charging, thereby solving the problem of low initial efficiency due to side reactions thereof, and improving the initial efficiency of the dry-processed electrode significantly; at the same time, the formulated binder formulation may improve the bonding effect between the active particles and between the active particles and the conductive agent, and can supplement the problem of insufficient bonding of the main binder of the network structure to the powder particles, thereby improving the quality of the film, improving the phenomenon of powder loss of the film, and improving cycle and other electrical properties of the cell.

The binder used in the present disclosure has a simple formula, and the method of manufacturing electrode sheet is short in time and low in energy consumption, which is beneficial to reducing cost and improving production efficiency. Compared with the dry process using only the main adhesive, the film and the electrode sheet obtained in the present disclosure have no sign of powder loss at the same compaction density, the strength of the film sheet is obviously improved, and the initial effect and cycle stability of the cell after assembly of the electrode sheets are effectively improved.

### BRIEF DESCRIPTION OF THE DRAWINGS

FIG. 1 is a graph illustrating comparison between tensile strengths of dry-processed negative sheets obtained in Example 1 and Comparative Examples 1-3;
FIG. 2 is a graph illustrating charging-discharging tests after the dry-processed negative sheets obtained in Example 1 and Comparative Examples 1-3 are assembled into cells.

### DETAILED DESCRIPTION OF EMBODIMENTS

The present disclosure provides a method of manufacturing an electrode including following steps:
S1 a dispersion binder and an aqueous binder are prepared into a glue liquid;
S2 an active material, a conductive agent, and a main binder are dry-mixed to obtain a first dry material;
S3 the glue liquid is added to the first dry material for dispersing, and drying to obtain a second dry material;
S4 the second dry material is pulverized to form a powder of a fibrillization binder;
S5 the powder is pressed to obtain a dry-processed electrode;
Among the above steps, the step S1 and the step S2 are in no particular order.

The purpose of the present disclosure is to provide a binder formulation for improving PTFE for dry-processed electrode fabrication and a process for electrode sheet processing using the formulation. It has been found in the present disclosure that a dispersion binder, in particular a small-molecule polymer binder such as PVP, is mixed with an aqueous binder to form a mixed glue liquid, and the mixed glue liquid is added to the fibrillized powder, can coat fibres of the main binder, such as PTFE fibres, and can significantly improve surrounding environment of the PTFE. Further, in the charging process, PTFE can be protected from being reduced, so that the problem of the low initial efficiency caused by the PTFE side reaction is solved, and the initial efficiency of the dry-processed system is significantly improved. At the same time, the mixed binders can bond the active particles to each other, and the active particles and the conductive agent to each other, which improves the problem of insufficient adhesion between the PTFE network structure and the powder particles, thereby improving the quality of the film sheet, improving the phenomenon of powder falling off the film sheet, and improving the cycle and other electrical properties of cells.

The binder used in the present disclosure has a simple formula, and the method of manufacturing the electrode sheet is short in time and low in energy consumption, which is beneficial to reducing cost and improving production efficiency. Compared with the dry process using only the main binder, the film layer and the electrode sheet obtained in the present disclosure have no signs of powder falling at the same compaction density, the strength of the film sheet is obviously improved, and the initial efficiency and cycle stability of the cells obtained after assembly of the electrode sheets are effectively improved.

The technical objects and advantageous effects of the present disclosure may be better achieved and realized by the following technical solutions, which may be the preferred technical solutions of the present disclosure, but are not the limitation of the technical solutions provided by the present disclosure.

As a preferred solution of the present disclosure, the process is carried out in a production environment at a temperature of 20 to 35°C and a humidity of 40% RH- to 60% RH.

As a preferred solution of the present disclosure, the dispersion binder includes a small-molecule polymer binder.

Preferably, the small-molecule polymer binder includes any one or a combination of at least two of PVP (polyvinylpyrrolidone, e.g., K15, K30, K60, or K90), P123 (polyethylene oxide-polypropylene oxide-polyethylene oxide triblock copolymer), or PEG (polyethylene glycol), and typical but non-limiting examples of the combinations include a combination of the PVP and the P123, a combination of the PVP and the PEG, or a combination of the P123 and the PEG.

Preferably, the aqueous binder includes any one or a combination of at least two of a polyacrylic acid (PAA) or a salt thereof or a copolymer thereof, a carboxymethyl cellulose (CMC) or a salt thereof or a copolymer thereof, an alginate, SBR emulsion, or PEG, typical but non-limiting examples of the combinations include a combination of the polyacrylic acid and the salt thereof or the copolymer thereof, a combination of the carboxymethyl cellulose and the salt thereof or the copolymer thereof, a combination of the polyacrylic acid and the alginate, a combination of the polyacrylic acid and the SBR emulsion, a combination of the polyacrylic acid and the PEG, a combination of the carboxymethyl cellulose and the alginate, a combination of the carboxymethyl cellulose and the SBR emulsion, a combination of the carboxymethyl cellulose and the PEG, a combination of the alginate and the SBR emulsion, a combination of the SBR emulsion and the PEG, or a combination of the PEG and the alginate.

As a preferred embodiment of the present disclosure, a mass ratio of the dispersion binder to the aqueous binder in the glue liquid is (1 to 3): 1, such as 1:1, 1.2:1, 1.8:1, 2: 1, 2.4:1, 2.6:1, 3: 1, or the like, but is not limited to the values enumerated above, and other values not enumerated within the above range of values are equally applicable.

In the present disclosure, the excessive amount of the dispersion binder may lead to the formation of thicker binder films on surfaces of main material particles, which affects exertion of the gram capacity and reduces the energy density of the battery. The effect of improving the electrochemical environment of the main binder on the negative electrode is poor when the amount of the dispersion binder is too low.

Preferably, a total mass concentration of the binder in the glue liquid is 5wt% to 30wt%, such as 5wt%, 7wt%, 9wt%, 11wt%, 13wt%, 15wt%, 17wt%, 19wt%, 21wt%, 23wt%, 25wt%, 27wt%, 29wt%, 30wt%, or the like, but is not limited to the values enumerated above, and other values not enumerated within the above range of values are equally applicable.

Preferably, in the method of preparing the glue liquid, firstly, the dispersion binder and the aqueous binder are respectively prepared into a liquid A and a liquid B, each of which has a mass concentration of 5wt% to 30wt%, such as 5wt%, 7wt%, 9wt%, 11wt%, 13wt%, 15wt%, 17wt%, 19wt%, 21wt%, 23wt%, 25wt%, 27wt%, 29wt%, 30wt%, or the like, and then, the liquid A and the liquid B are mixed with each other, and the mass concentration is adjusted to be 5wt% to 30wt% by a solvent, such as 5wt%, 7wt%, 9wt%, 11wt%, 13wt%, 15wt%, 17wt%, 19wt%, 21wt%, 23wt%, 25wt%, 27wt%, 29wt%, 30wt%, or the like, to obtain the glue liquid. However, the mass concentration is not limited to the values enumerated above, and other values not enumerated within the above range of values are equally applicable.

Preferably, the solvent includes water.

As a preferred embodiment of the present disclosure, the main binder includes polytetrafluoroethylene (PTFE) and/or polytetrafluoroethylene derivative.

Preferably, the polytetrafluoroethylene derivative includes any one or a combination of at least two of tetrafluoroethylene to hexafluoropropylene copolymer (FEP), ethylene-tetrafluoroethylene copolymer (ETFE), or tetrafluoroethylene-perfluoroalkyl vinyl ether copolymer (PFA), and typical but non-limiting examples of the combination include a combination of the tetrafluoroethylene-hexafluoropropylene copolymer and the ethylene-tetrafluoroethylene copolymer, a combination of the tetrafluoroethylene-perfluoroalkyl vinyl ether copolymer and the tetrafluoroethylene-hexafluoropropylene copolymer, or a combination of the ethylene-tetrafluoroethylene copolymer and the tetrafluoroethylene-perfluoroalkyl vinyl ether copolymer.

Preferably, the conductive agent includes any one or a combination of at least two of conductive carbon black (SP), carbon nanofiber (VGCF), carbon nanotubes (CNTs), or graphene, and typical but non-limiting examples of the conductive agent include a combination of the conductive carbon black and the carbon nanofibers, a combination of the conductive carbon black and the carbon nanotubes, a combination of the conductive carbon black and the graphene, a combination of the carbon nanofibers and the carbon nanotubes, a combination of the carbon nanofibers and the graphene, or a combination of the carbon nanotubes and the graphene.

Preferably, when the dry-processed electrode is a negative electrode, the active material includes any one or a combination of at least two of graphite (natural graphite and/or artificial graphite), a silicon-carbon composite, or a silicon-oxygen composite, and typical but non-limiting examples of the active material include a combination of the graphite and the silicon-carbon composite, a combination of the graphite and the silicon-oxygen composite, or a combination of the silicon-carbon composite and the silicon-oxygen composite.

As a preferred solution of the present disclosure, in the method of dry-mixing, a first mixing is firstly performed at a first dry-mixing rotate speed, and then a second mixing is performed at a second dry-mixing rotate speed higher than the first dry-mixing rotate speed.

Preferably, the dry-mixing is carried out in a high speed-mixer with a cutter and a scraper.

Preferably, under the first dry-mixing rotate speed, a rotate speed of the cutter is 1000 rpm to 30000 rpm, such as 1000 rpm, 3000 rpm, 5000 rpm, 7000 rpm, 9000 rpm, 12000 rpm, 15000 rpm, 18000 rpm, 21000 rpm, 25000 rpm, 27000 rpm, 30000 rpm, or the like, and a rotate speed of the scraper is 50 rpm to 1000 rpm, such as 50 rpm, 100 rpm, 200 rpm, 300 rpm, 400 rpm, 500 rpm, 600 rpm, 700 rpm, 800 rpm, 900 rpm, 1000 rpm, or the like. However, the rotate speeds are not limited to the values enumerated above, and other values not enumerated within the above range of values are equally applicable.

Preferably, under the second dry-mixing speed, a rotate speed of the cutter is 1500 rpm to 30000 rpm, such as 1500 rpm, 3000 rpm, 5000 rpm, 7000 rpm, 9000 rpm, 12000 rpm, 15000 rpm, 18000 rpm, 21000 rpm, 25000 rpm, 27000 rpm, 30000 rpm, or the like, and a rotate speed of the scraper is 50 rpm to 1000 rpm, such as 50 rpm, 100 rpm, 200 rpm, 300 rpm, 400 rpm, 500 rpm, 600 rpm, 700 rpm, 800 rpm, 900 rpm, 1000 rpm, or the like. However, the rotate speeds are not limited to the values enumerated above, and other values not enumerated within the above range of values are equally applicable.

Preferably, the duration of the first mixing is 1 min to 60 min, such as 1 min, 5 min, 10 min, 15 min, 20 min, 25 min, 30 min, 35 min, 40 min, 45 min, 50 min, 55 min, 60 min, or the like, but not limited to the values enumerated above, and other values not enumerated within the above range of values are equally applicable.

Preferably, the duration of the second mixing is 1 min to 60 min, such as 1 min, 5 min, 10 min, 15 min, 20 min, 25 min, 30 min, 35 min, 40 min, 45 min, 50 min, 55 min, 60 min, or the like, but not limited to the values enumerated above, and other values not enumerated within the above range of values are equally applicable.

Preferably, after the dry-mixing, a sieving is carried out to obtain a first dry material of 8 mesh to 50 mesh, such as 8 mesh, 11 mesh, 14 mesh, 17 mesh, 20 mesh, 23 mesh, 26 mesh, 29 mesh, 32 mesh, 35 mesh, 38 mesh, 41 mesh, 44 mesh, 47 mesh, 50 mesh, or the like, but not limited to the values enumerated above, and other values not enumerated within the above range of values are equally applicable.

Preferably, the dry-mixing is carried out in a high-speed mixer.

As a preferred technical solution of the present disclosure, the glue liquid is added to the first dry material for dispersion so that the solid content of the system is 70wt% to 90wt%, such as 70wt%, 72wt%, 74wt%, 76wt%, 78wt%, 80wt%, 82wt%, 84wt%, 86wt%, 88wt%, 90wt%, or the like, and a ratio of a mass of the main binder in the first dry material to a total mass of the dispersion binder and the aqueous binder in the glue liquid is controlled to be (0.5 to 3): 1, such as 0.5:1, 0.7:1, 0.9:1, 1.1:1, 1.3:1, 1.5:1, 1.7:1, 1.9:1, 2.1:1, 2.3:1, 2.5:1, 2.7:1, or 3: 1, but not limited to the values enumerated above, and other values not enumerated within the above range of values are equally applicable.

Preferably, the drying is performed in a temperature of 0°C to 120°C, such as 0°C, 10°C, 20°C, 30°C, 40°C, 50°C, 60°C, 70°C, 80°C, 90°C, 100°C, 110°C, 120°C, or the like, and the drying is performed for a time of 2 h (hour) to 24 h, such as 2 h, 4 h, 6 h, 8 h, 10 h, 12h, 14 h, 16 h, 18 h, 20 h, 22 h, 24 h, or the like. However, the drying temperature and the drying time are not limited to the values enumerated above, and other values not enumerated within the above range of values are equally applicable.

Preferably, the second dry material has a particle size of 8 mesh to 40 mesh, such as 8 mesh, 11 mesh, 14 mesh, 17 mesh, 20 mesh, 23 mesh, 26 mesh, 29 mesh, 32 mesh, 35 mesh, 38 mesh, 41 mesh, 44 mesh, 47 mesh, 50 mesh, or the like.. However, the particle size is not limited to the values enumerated above, and other values not enumerated within the above range of values are equally applicable.

Preferably, on the basis that the mass of the second dry material is 100wt%, the mass of the active substance is calculated to be 92wt% to 96wt%, such as 92wt%, 92.2wt%, 92.4wt%, 92.6wt%, 92.8wt%, 93wt%, 93.2wt%, 93.4wt%, 93.6wt%, 93.8wt%, 94wt%, 94.2wt%, 94.4wt%, 94.6wt%, 94.8wt%, 95wt%, 95.2wt%, 95.4wt%, 95.6wt%, 95.8wt%, 96wt%, or the like, but it is not limited to the values enumerated above, and other values not enumerated within the above range of values are equally applicable.

Preferably, on the basis that the mass of the second dry material is 100wt%, the mass of the conductive agent is calculated to be 0.5wt% to 1.5wt%, such as 0.5wt%, 0.6wt%, 0.7wt%, 0.8wt%, 0.9wt%, 1wt%, 1.1wt%, 1.2wt%, 1.3wt%, 1.4wt%, 1.5wt%, or the like, but it is not limited to the values enumerated above, and other values not enumerated within the above range of values are equally applicable.

Preferably, on the basis that the mass of the second dry material is 100wt%, the total mass of the binders is calculated to be 2.5wt% to 8.5wt%, such as 2.5wt%, 2.7wt%, 2.9wt%, 3.1wt%, 3.3wt%, 3.5wt%, 3.7wt%, 3.9wt%, 4.1wt%, 4.3wt%, 4.5wt%, 4.7wt%, 4.9wt%, 5.1wt%, 5.3wt%, 5.5wt%, 5.7wt%, 5.9wt%, 6.1wt%, 6.3wt%, 6.5wt%, 6.7wt%, 6.9wt%, 7.1wt%, 7.3wt%, 7.5wt%, 7.7wt%, 7.9wt%, 8.1wt%, 8.3wt%, 8.5wt%, or the like, but it is not limited to the values enumerated above, and other values not enumerated within the above range of values are equally applicable.

Preferably, in the second dry material, the mass ratio of the main binder, the dispersion binder, and the aqueous binder is (1 to 12):(1 to 3):1, such as 1:1:1, 1:2:1, 1:3:1, 2:1:1, 2:2:1, 2:3:1, 3:1:1, 3:2:1, 3:3:1, 4:1:1, 4:2:1, 4:3:1, 5:1:1, 5:2:1, 5:3:1, 6:1:1, 6:2:1, 6:3:1, 7:1:1, 7:2:1, 7:3:1, 8:1:1, 8:2:1, 8:3:1, 9:1:1, 9:2:1, 9:3:1, 10:1:1, 10:2:1, 10:3:1, 11:1:1, 11:2:1, 11:3:1, 12:1:1, 12:2:1, 12:3:1, or the like, but it is not limited to the values enumerated above, and other values not enumerated within the above range of values are equally applicable.

Preferably, on the basis that the mass of the second dry material is 100wt%, the mass of the main binder is 1wt% to 5wt%, such as 1wt%, 1.2wt%, 1.4wt%, 1.6wt%, 1.8wt%, 2wt%, 2.2wt%, 2.4wt%, 2.6wt%, 2.8wt%, 3wt%, 3.2wt%, 3.4wt%, 3.6wt%, 3.8wt%, 4wt%, 4.2wt%, 4.4wt%, 4.6wt%, 4.8wt%, 5wt%, or the like, but it is not limited to the values enumerated above, and other values not enumerated within the above range of values are equally applicable.

Preferably, on the basis that the mass of the second dry material is 100wt%, the mass of the dispersion binder is 1wt% to 1.5wt%, such as 1wt%, 1.1wt%, 1.2wt%, 1.3wt%, 1.4wt%, 1.5wt%, or the like, but it is not limited to the values enumerated above, and other values not enumerated within the above range of values are equally applicable.

Preferably, on the basis that the mass of the second dry material is 100wt%, the mass of the aqueous binder is 0.5wt% to 1wt%, such as 0.5wt%, 0.6wt%, 0.7wt%, 0.8wt%, 0.9wt%, 1wt%, or the like, but it is not limited to the values enumerated above, and other values not enumerated within the above range of values are equally applicable.

As a preferred embodiment of the present disclosure, the pulverization is carried out in a pulverizer and/or a high-speed pulverizer.

Preferably, the pulverization is carried out at a rotate speed of 1500 rpm to 30000 rpm, such as 1500 rpm, 3000 rpm, 5000 rpm, 7500 rpm, 10000 rpm, 12500 rpm, 15000 rpm, 17500 rpm, 20000 rpm, 22500 rpm, 25000 rpm, 27500 rpm, 30000 rpm, or the like, but it is not limited to the values enumerated above, and other values not enumerated within the above range of values are equally applicable.

Preferably, the powder has a particle size of 35 mesh to 200 mesh, such as 35 mesh, 50 mesh, 75 mesh, 100 mesh, 125 mesh, 150 mesh, 175 mesh, 200 mesh, or the like, but it is not limited to the values enumerated above, and other values not enumerated within the above range of values are equally applicable.

In the method of the present disclosure, the particle size of the powder after the fibrillization of the first dry material, the second dry material, and the binder needs to be controlled so as to prevent the formation of particles having a large amount of glue due to the large particle size, which is not conducive to dispersion.

Preferably, the method of pressing includes a rolling method.

As a preferred solution of the present disclosure, the method includes the following steps.

At a step S1, a dispersion binder and an aqueous binder are respectively prepared into a liquid A and a liquid B, each of which has a mass concentration of 5wt% to 30wt%, using solvent water, the liquid A and the liquid B are mixed with each other, the mass ratio of the dispersion binder to the aqueous binder is controlled to be (1 to 3):1, and the mass concentration of the binder is adjusted to 5 to 30wt% using solvent water to obtain a glue liquid. The dispersion binder is a small-molecule polymer binder.

At a step S2, the negative electrode active material, the conductive agent and the main binder are dry-mixed in a high-speed mixer, a first mixing is firstly performed at a first dry-mixing speed, a second mixing is performed at a second dry-mixing speed higher than the first dry-mixing speed, and then a sieving is carried out to obtain a first dry material of 8 mesh to 50 mesh. The main binder includes polytetrafluoroethylene and/or polytetrafluoroethylene derivatives.

At a step S3, the glue liquid is added to the first dry material for dispersion so that the solid content of the system is 70wt% to 90wt%, a ratio of the mass of the main binder in the first dry material to the total mass of the dispersion binder and the aqueous binder in the glue liquid is controlled to be (0.5 to 3):1, and a drying treatment is performed to obtain a second dry material having a particle size of 8 mesh to 40 mesh. On the basis that the mass of the second dry material is 100wt%, the mass of the active material is 92wt% to 96wt%, the mass of the conductive agent is 0.5wt% to 1.5wt%, the mass of the main binder is 1wt% to 5wt%, the mass of the dispersion binder is 1wt% to 1.5wt%, and the mass of the aqueous binder is 0.5wt% to 1wt%. In the second dry material, the mass ratio of the main binder, the dispersion binder, and the aqueous binder is (1 to 12):(1 to 3):1.

At a step S4, the second dry material is pulverized in a pulverizer and/or a high-speed pulverizer at 1500 rpm to 30000 rpm to form a binder-fibrillized powder, and the powder has a particle size of 35 mesh to 200 mesh.

At a step S5, the powder is calendered using a roller press to obtain a dry-processed negative electrode.

The step S1 and the step S2 are not in sequence.

The present disclosure provides a dry-processed electrode obtained using the method described in the first aspect.

The present disclosure provides a battery including the dry-processed electrode according to the second aspect.

### Example 1

This example provides a method of manufacturing a dry-processed negative electrode, the method includes following steps.

At a step S1, a dispersion binder and an aqueous binder were prepared into a glue liquid.

At a step S2, an active substance, a conductive agent, and a main binder were dry-mixed to obtain a first dry material.

At a step S3, the glue liquid was added to the first dry material for dispersion, and a drying treatment was performed to obtain a second dry material.

At a step S4, the second dry material was pulverized to form a binder-fibrillized powder.

At a step S5, the powder was calendered to obtain a dry-processed electrode.

In this method, the step S1 and the step S2 are not in sequence.

Specifically, the step S1 includes: firstly, a dispersion binder PEG and an aqueous binder CMC were respectively prepared into a liquid A and a liquid B, each of which has a mass concentration of 17wt%, using solvent water; and then the liquid A and the liquid B were mixed, the mass ratio of the dispersion binder to the aqueous binder was controlled to be 1.5:1, and the mass concentration was adjusted to 17wt% using solvent water to obtain a glue liquid. The dispersion binder was a small-molecule polymer binder.

The step S2 includes: graphite (G) as the negative electrode active material, conductive carbon black (SP) as the conductive agent and polytetrafluoroethylene (PTFE) as the main binder were dry-mixed in a high-speed mixer, a first mixing was performed at a first dry-mixing speed, a second mixing was performed at a second dry-mixing speed higher than the first dry-mixing speed, and a sieving was carried out to obtain a first dry material of 20 mesh.

The step S3 includes: the glue liquid was added to the first dry material for dispersion so that the solid content of the system was 80wt% and the ratio of the mass of the main binder in the first dry material to the total mass of the dispersion binder and the aqueous binder in the glue liquid was controlled to be 2:1, and a second dry material having a particle size of 30 mesh was obtained after drying. On the basis that the mass of the second dry material was 100wt%, the mass of the active material was 96wt%, the mass of the conductive agent was 1wt%, the mass of the main binder was 2wt%, the mass of the dispersion binder was 0.6wt%, and the mass of the aqueous binder was 0.4wt%. In the second dry material, the mass ratio of the main binder, the dispersion binder, and the aqueous binder was 5:1.5:1.

The step S4 includes: the second dry material was placed in a pulverizer and/or a high-speed pulverizer, and was pulverized at 20000 rpm to form a binder-fibrillized powder. The powder had a particle size of 60 mesh;

The step S5 includes: the powder was calendered using a roller press to obtain a dry-processed negative electrode.

### Example 2

This example provides a method of manufacturing a dry-processed negative electrode, the method includes following steps.

At a step S1, a dispersion binder PVP and an aqueous binder PAA were respectively prepared into a liquid A and a liquid B, each of which has a mass concentration of 5wt%, using solvent water, and then the liquid A and the liquid B were mixed, the mass ratio of the dispersion binder to the aqueous binder was controlled to be 3: 1, and the mass concentration was adjusted to 5wt% using solvent water to obtain a glue liquid. The dispersion binder was a small-molecule polymer binder.

At a step S2, carbon-coated silicon particles as the negative electrode active material, carbon nanotubes as the conductive agent and tetrafluoroethylene-hexafluoropropylene copolymer (FEP) as the main binder were dry-mixed in a high-speed mixer, a first mixing was performed at a first dry-mixing speed, a second mixing was performed at a second dry-mixing speed higher than the first dry-mixing speed, and a sieving was carried out to obtain a first dry material of 8 mesh.

At a step S3, the glue liquid was added to the first dry material for dispersion so that the solid content of the system was 70wt% and the ratio of the mass of the main binder in the first dry material to the total mass of the dispersion binder and the aqueous binder in the glue liquid was controlled to be 2.75:1, and a second dry material having a particle size of 8 mesh was obtained after drying. On the basis that the mass of the second dry material was 100wt%, the mass of the active material was 92wt%, the mass of the conductive agent was 0.5wt%, the mass of the main binder was 5.5wt%, the mass of the dispersion binder was 1.5wt%, and the mass of the aqueous binder was 0.5wt%. In the second dry material, the mass ratio of the main binder, the dispersion binder, and the aqueous binder was 11:3:1.

At a step S4, the second dry material was placed in a pulverizer and/or a high-speed pulverizer, and was pulverized at 1500 rpm to form a binder-fibrillized powder. The powder had a particle size of 200 mesh.

At a step S5, the powder was calendered using a roller press to obtain a dry-processed negative electrode.

### Example 3

This example provides a method of manufacturing a dry-processed negative electrode, the method includes following steps.

At a step S1, a dispersion binder P123 and an aqueous binder SBR were respectively prepared into a liquid A and a liquid B, each of which has a mass concentration of 30wt%, using solvent water, and then the liquid A and the liquid B were mixed, the mass ratio of the dispersion binder to the aqueous binder was controlled to be 3: 1, and the mass concentration was adjusted to 30wt% using solvent water to obtain a glue liquid. The dispersion binder was a small-molecule polymer binder;

At a step S2, carbon-coated silicon particles as the negative electrode active material, carbon nanotubes as the conductive agent and ethylene-tetrafluoroethylene copolymer (ETFE) as the main binder were dry-mixed in a high-speed mixer, a first mixing was performed at a first dry-mixing speed, a second mixing was performed at a second dry-mixing speed higher than the first dry-mixing speed, and a sieving was carried out to obtain a first dry material of 50 mesh.

At a step S3, the glue liquid was added to the first dry material for dispersion so that the solid content of the system was 90wt% and the ratio of the mass of the main binder in the first dry material to the total mass of the dispersion binder and the aqueous binder in the glue liquid was controlled to be 0.5:1, and a second dry material having a particle size of 40 mesh was obtained after drying. On the basis that the mass of the second dry material was 100wt%, the mass of the active material was 95.5wt%, the mass of the conductive agent was 1.5wt%, the mass of the main binder was 1wt%, the mass of the dispersion binder was 1.5wt%, and the mass of the aqueous binder was 0.5wt%. In the second dry material, the mass ratio of the main binder, the dispersion binder, and the aqueous binder was 2:3:1;

At a step S4, P the second dry material was placed in a pulverizer and/or a high-speed pulverizer, and was pulverized at 30000 rpm to form a binder-fibrillized powder. The powder had a particle size of 35 mesh;

At a step S5, the powder was calendered using a roller press to obtain a dry-processed negative electrode.

### Example 4

This example provides a method of manufacturing a dry-processed negative electrode, this example is similar to Example 1 except that in the step S1, the mass ratio of a dispersion binder to an aqueous binder was adjusted from 1.5:1 to 4:1, so that in the step S3, the mass of the dispersion binder was adjusted from 0.6wt% to 0.8wt%, the mass of the aqueous binder was adjusted from 0.4wt% to 0.2wt%, and the mass ratio of the main binder, the dispersion binder, and the aqueous binder is changed from 5:1.5:1 to 10:4:1.

### Example 5

This example provides a method of manufacturing a dry-processed negative electrode, this example is similar to Example 1 except that in the step S1, the mass ratio of a dispersion binder to an aqueous binder was adjusted from 1.5:1 to 3:1, so that in the step S3, the mass of the dispersion binder was adjusted from 0.6wt% to 0.75wt%, the mass of the aqueous binder was adjusted from 0.4wt% to 0.25wt%, and the mass ratio of the main binder, the dispersion binder, and the aqueous binder was changed from 5:1.5:1 to 8:3:1.

### Example 6

This example provides a method of manufacturing a dry-processed negative electrode, this example is similar to Example 1 except that in the step S1, the mass ratio of a dispersion binder to an aqueous binder was adjusted from 1.5:1 to 0.5:1, so that in the step S3, the mass of the dispersion binder was adjusted from 0.6wt% to 0.33wt%, the mass of the aqueous binder was adjusted from 0.4wt% to 0.66wt%, and the mass ratio of the main binder, the dispersion binder, and the aqueous binder is changed from 5:1.5:1 to 3:0.5:1.

### Example 7

This example provides a method of manufacturing a dry-processed negative electrode, this example is similar to Example 1 except that in the step S1, the mass ratio of a dispersion binder to an aqueous binder was adjusted from 1.5:1 to 0.33:1, so that in the step S3, the mass of the dispersion binder was adjusted from 0.6wt% to 0.25wt%, the mass of the aqueous binder was adjusted from 0.4wt% to 0.66wt%, and the mass ratio of the main binder, the dispersion binder, and the aqueous binder was changed from 5:1.5:1 to 2.67:0.33:1.

### Example 8

This example provides a method of manufacturing a dry-processed negative electrode, this example is similar to Example 1 except that in the step S2, the amount of a main binder was adjusted so that in the step S3, the ratio of the mass of the main binder to the total mass of the dispersion binder and the aqueous binder in the glue liquid was adjusted from 2: 1 to 0.5:1, and in the step S3, the mass of the active material was adjusted from 96wt% to 97.5wt% and the mass of the main binder was adjusted from 2wt% to 0.5wt%, so that the mass ratio of the main binder, the dispersion binder, and the aqueous binder was changed from 5:1.5:1 to 1.25:1.5:1.

### Example 9

This example provides a method of manufacturing a dry-processed negative electrode, this example is similar to Example 1 except that in the step S2, the amount of a main binder was adjusted so that in the step S3, the ratio of the mass of the main binder to the total mass of the dispersion binder and the aqueous binder in the glue liquid was adjusted from 2: 1 to 1:1, and in the step S3, the mass of the active material was adjusted from 96wt% to 97wt% and the mass of the main binder was adjusted from 2wt% to 1wt%, so that the mass ratio of the main binder, the dispersion binder, and the aqueous binder was changed from 5:1.5:1 to 2.5:1.5:1.

### Example 10

This example provides a method of manufacturing a dry-processed negative electrode, this example is similar to Example 1 except that in the step S2, the amount of a main binder was adjusted so that in the step S3, the ratio of the mass of the main binder to the total mass of the dispersion binder and the aqueous binder in the glue liquid was adjusted from 2: 1 to 3:1, and in the step S3, the mass of the active material was adjusted from 96wt% to 95wt% and the mass of the main binder was adjusted from 2wt% to 3wt%, so that the mass ratio of the main binder, the dispersion binder, and the aqueous binder was changed from 5:1.5:1 to 7.5:1.5:1.

### Example 11

This example provides a method of manufacturing a dry-processed negative electrode, this example is similar to Example 1 except that in the step S2, the amount of a main binder was adjusted so that in the step S3, the ratio of the mass of the main binder to the total mass of the dispersion binder and the aqueous binder in the glue liquid was adjusted from 2: 1 to 4: 1, and in the step S3, the mass of the active material was adjusted from 96wt% to 94wt% and the mass of the main binder was adjusted from 2wt% to 4wt%, so that the mass ratio of the main binder, the dispersion binder, and the aqueous binder was changed from 5:1.5:1 to 10:1.5:1.

### Example 12

This example provides a method of manufacturing a dry-processed negative electrode, this example is similar to Example 1 except that in the step S2, a particle size of a second dry material was adjusted from 30 mesh to 5 mesh.

### Example 13

This example provides a method of manufacturing a dry-processed negative electrode, this example is similar to Example 1 except that in the step S2, a particle size of a second dry material was adjusted from 30 mesh to 8 mesh.

### Example 14

This example provides a method of manufacturing a dry-processed negative electrode, this example is similar to Example 1 except that in the step S2, a particle size of a second dry material was adjusted from 30 mesh to 40 mesh.

### Example 15

This example provides a method of manufacturing a dry-processed negative electrode, this example is similar to Example 1 except that in the step S2, a particle size of a second dry material was adjusted from 30 mesh to 45 mesh.

### Example 16

This example provides a method of manufacturing a dry-processed negative electrode, this example is similar to Example 1 except that in the step S4, a particle size of powder was adjusted from 60 mesh to 35 mesh.

### Example 17

This example provides a method of manufacturing a dry-processed negative electrode, this example is similar to Example 1 except that in the step S(4), a particle size of powder was adjusted from 60 mesh to 100 mesh.

### Example 18

This example provides a method of manufacturing a dry-processed negative electrode, this example is similar to Example 1 except that in the step S4, a particle size of powder was adjusted from 60 mesh to 200 mesh.

### Example 19

This example provides a method of manufacturing a dry-processed negative electrode, this example is similar to Example 1 except that in the step S4, a particle size of powder was adjusted from 60 mesh to 210 mesh.

### Example 20

This example provides a method of manufacturing a dry-processed negative electrode, this example is similar to Example 1 except that in the step S1, CMC was replaced with PEG as an aqueous binder so that the dispersion binder is identical to the aqueous binder.

### Comparative Example 1

The present comparative example provides a method of manufacturing a dry-processed negative electrode without using a dispersion binder and an aqueous binder, that is, this example is similar to Example 1 except that in the step S1 of this method, the dispersion binder and the aqueous binder were replaced with an equal amount of a main binder and the main binder was prepared into a glue liquid for subsequent steps.

### Comparative Example 2

The present comparative example provides a method of manufacturing a dry-processed negative electrode without using an aqueous binder, that is, this example is similar to Example 1 except that in the step S1 of this method, the aqueous binder was replaced with an equal amount of a main binder, and the main binder and the dispersion binder were prepared into a glue liquid for subsequent steps.

### Comparative Example 3

The present comparative example provides a method of manufacturing a dry-processed negative electrode without using a dispersion binder, that is, this example is similar to Example 1 except that in the step S1 of this method, the dispersion binder was replaced with an equal amount of a main binder, and the main binder and the aqueous binder were prepared into a glue liquid for subsequent steps.

The dry-processed negative electrode sheets obtained in the examples and the comparative examples were assembled into cells CR-2025 (negative electrode half-cell), and the cells were tested using a Xinwei battery test cabinet for initial charging/discharging performance, cycle performance, or the like;

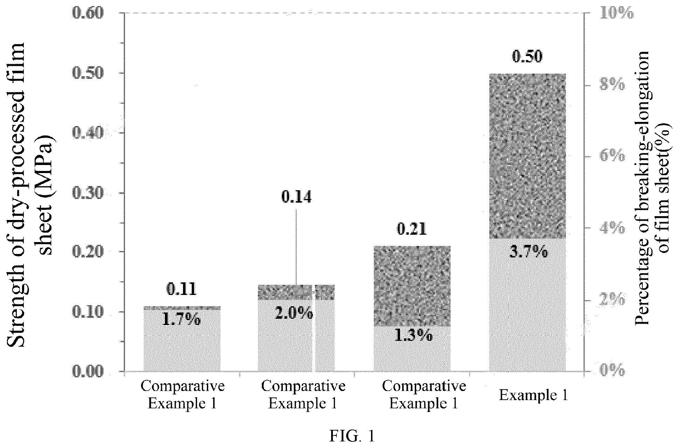

FIG. 1 is a graph comparing tensile strengths of dry-processed negative electrode sheets obtained in Example 1 and Comparative Examples 1-3. It can be seen from the graph that the tensile strength and percentage of breaking-elongation of the sheets obtained without the addition of other binders in combination with the main binder and with the addition of a single binder in combination with the main binder were lower than those of the sheet obtained with the aqueous binder in combination with the dispersion binder according to the present disclosure.

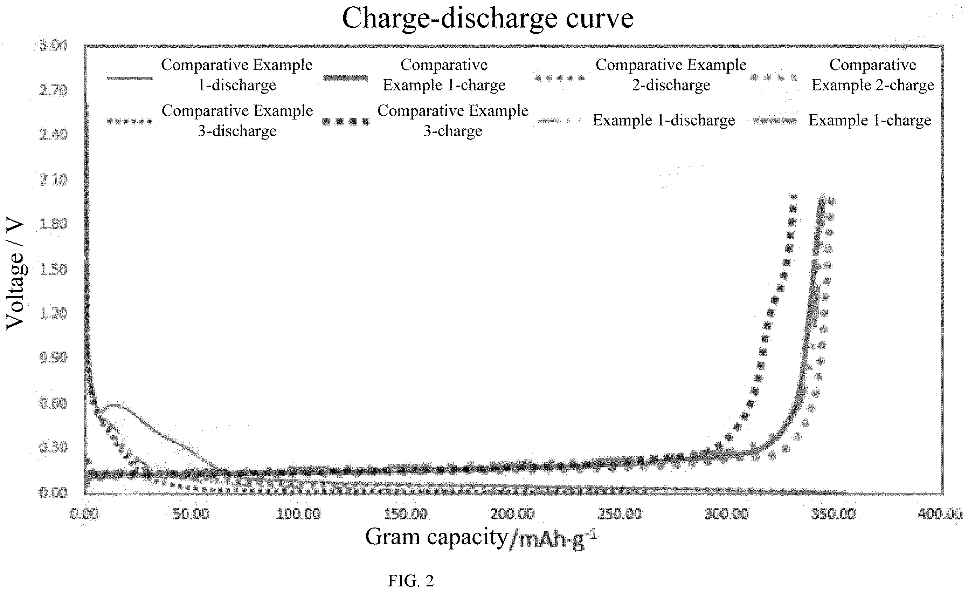

FIG. 2 is a graph of charging-discharging tests after the dry-processed negative sheets obtained in Example 1 and Comparative Examples 1-3 are assembled into cells. It can be seen from the graph that side reactions at the low voltage during discharging of the sheets obtained without the addition of other binders in combination with the main binder and with the addition of a single binder in combination with the main binder were higher than those of the sheet obtained with the aqueous binder in combination with the dispersion binder according to the present disclosure.

Results of other examples and comparative examples are shown in Table 1.

**Table 1**

| Item | Initial Efficiency (%) | 0.2C positive electrode gram capacity (mAh·g⁻¹) |
|---|---|---|
| Example 1 | 90.5 | 142.3 |
| Example 2 | 89.5 | 141.5 |
| Example 3 | 88.7 | 141.2 |
| Example 4 | 89.2 | 141.7 |
| Example 5 | 89.6 | 141.0 |
| Example 6 | 89.0 | 141.1 |
| Example 7 | 85.2 | 132.6 |
| Example 8 | 86.5 | 138.1 |
| Example 9 | 87.4 | 140.2 |
| Example 10 | 86.3 | 138.6 |
| Example 11 | 84.3 | 129.5 |
| Example 12 | 88.6 | 140.2 |
| Example 13 | 89.2 | 140.9 |
| Example 14 | 88.1 | 139.5 |
| Example 15 | 86.4 | 138.2 |
| Example 16 | 88.2 | 140.3 |
| Example 17 | 85.2 | 132.5 |
| Example 18 | 83.1 | 128.6 |
| Example 19 | 81.5 | 121.3 |
| Example 20 | 88.5 | 140.2 |
| Comparative Example 1 | 84.7 | 116.2 |
| Comparative Example 2 | 85.2 | 125.5 |
| Comparative Example 3 | 86.5 | 132.1 |

It can be seen from Table 1:
From the comparison of Example 1 and Comparative Examples 1-3, it can be seen that the initial efficiency and exertion of the gram capacity of the cells obtained with the addition of only a single water-based binder or a dispersion binder were less effect than those of the cell obtained with the aqueous binder in combination with the dispersion binder; from the comparison of Examples 1 and Examples 4-7, it can be seen that the ratio of the aqueous binder to the dispersion binder may affect the initial efficiency and exertion of the gram capacity of the cells; it can be seen from the comparison of the Example 1 and the Examples 8-11 that the addition amount of the main binder PTFE had an effect on the gram capacity and the initial efficiency of the cells, the increase in the amount of the main binder PTFE excessively occupies the amount of the active material, and at this time, the improvement effect of the same amount of the aqueous binder and the dispersion binder on the incremental main binder was weakened; from the comparison of Example 1 and Examples 12 to 15, it can be seen that when the particle size of the second dry material dispersed by adding the glue liquid is too large, the dispersion effect may be affected, and thus the performance of the sheets were slightly affected; from the comparison of Example 1 and Examples 16-19, it can be seen that the particle size of the binder-fibrillized powder finally obtained was very important, and when the particle size was large, the performance of the sheets was degraded; from comparison of Example 1 and Example 20, when both the aqueous binder and the dispersion binder were small molecule polymer PEG, the gram capacity and the initial efficiency of the cells were affected, and the effect was inferior to that of Example 1.

## Claims

1. A method of manufacturing a dry-processed electrode, **characterized by** comprising steps of:
formulating a dispersion binder and an aqueous binder into a glue liquid;
dry-mixing an active material, a conductive agent, and a main binder to obtain a first dry material;
adding the glue liquid to the first dry material for dispersion, and performing a drying treatment to obtain a second dry material;
pulverizing the second dry material to form a binder-fibrillized powder; and
pressing the powder to obtain a dry-processed electrode;
wherein the step of formulating the dispersion binder and the aqueous binder into the glue liquid and the step of dry-mixing the active material, the conductive agent and the main binder to obtain the first dry material are in a non-sequential order.

2. The method of claim 1, **characterized in that** the dispersion binder comprises a small molecule polymer binder; wherein the small molecule polymer binder is any one or a combination of at least two of polyvinylpyrrolidone, polyethylene oxide-polypropylene oxide-polyethylene oxide triblock copolymer, or polyethylene glycol; and
preferably, the aqueous binder comprises any one or a combination of at least two of a polyacrylic acid or a salt of the polyacrylic acid or a copolymer of the polyacrylic acid, carboxymethyl cellulose or a salt of the carboxymethyl cellulose or a copolymer of the carboxymethyl cellulose, an alginate, an SBR emulsion, or PEG.

3. The method of claim 1 or 2, **characterized in that** a mass ratio of the dispersion binder to the aqueous binder in the glue liquid is (1 to 3):1;
preferably, a total mass concentration of binders in the glue liquid is 5wt% to 30wt%;
preferably, the step for formulating the dispersion binder and the aqueous binder into the glue liquid comprises: formulating the dispersion binder and the aqueous binder into a liquid A and a liquid B respectively, each having a mass concentration of 5wt% to 30wt%; and mixing the liquid A and the liquid B, and adjusting the mass concentration to 5wt% to 30wt% using a solvent to obtain the glue liquid; and
preferably, the solvent comprises water.

4. The method of any one of claims 1 to 3, **characterized in that** the main binder comprises polytetrafluoroethylene and/or polytetrafluoroethylene derivative;
preferably, the polytetrafluoroethylene derivative comprises any one or a combination of at least two of a tetrafluoroethylene-hexafluoropropylene copolymer, an ethylene-tetrafluoroethylene copolymer, or a tetrafluoroethylene-perfluoroalkyl vinyl ether copolymer;
preferably, the conductive agent comprises any one or a combination of at least two of conductive carbon black, carbon nanofibers, carbon nanotubes, or graphene;
preferably, when the dry-processed electrode is a negative electrode, the active material comprises any one or a combination of at least two of graphite, silicon-carbon composite or silicon-oxygen composite.

5. The method of any one of claims 1 to 4, **characterized in that** the step of dry-mixing the active material, the conductive agent, and the main binder to obtain the first dry material comprises: performing a first mixing at a first dry-mixing rotate speed firstly; and then performing a second mixing at a second dry-mixing rotate speed higher than the first dry-mixing rotate speed;
preferably, the dry-mixing is carried out in a high-speed mixer with a cutter and a scraper;
preferably, under the first dry-mixing rotate speed, a rotate speed of the cutter is 1000 rpm to 30000 rpm, and a rotate speed of the scraper is 50 rpm to 1000 rpm;
preferably, under the second dry-mixing rotate speed, a rotate speed of the cutter is 1500 rpm to 30000 rpm, and a rotate speed of the scraper is 50 rpm to 1000 rpm;
preferably, a duration of the first mixing is 1 min to 60 min;
preferably, a duration of the second mixing is 1 min to 60 min; and
preferably, after the dry-mixing, a sieving is performed to obtain a first dry material of 8 mesh to 50 mesh.

6. The method of any one of claims 1 to 5, **characterized in that** the glue liquid is added to the first dry material for dispersion so that a solid content of system is 70wt% to 90wt%, and a ratio of a mass of the main binder in the first dry material to a total mass of the dispersion binder and the aqueous binder in the glue liquid is controlled to be (0.5 to 3):1;
preferably, a temperature of the drying treatment is 0°C to 120°C, and a duration of the drying treatment is 2 h to 24 h;
preferably, the second dry material has a particle size of 8 mesh to 40 mesh;
preferably, on a basis that a mass of the second dry material is 100wt%, a mass of the active material is 92wt% to 96wt%;
preferably, on a basis that a mass of the second dry material is 100wt%, a mass of the conductive agent is 0.5wt% to 1.5wt%;
preferably, on a basis that a mass of the second dry material is 100wt%, a total mass of binders is 2.5wt% to 8.5wt%;
preferably, in the second dry material, a mass ratio of the main binder, the dispersion binder, and the aqueous binder is (1 to 12):(1 to 3):1;
preferably, on a basis that a mass of the second dry material is 100wt%, a mass of the main binder is 1wt% to 6wt%;
preferably, on a basis that a mass of the second dry material is 100wt%, a mass of the dispersion binder is 1wt% to 1.5wt%; and
preferably, on a basis that a mass of the second dry material is 100wt%, a mass of the aqueous binder is 0.5wt% to 1wt%.

7. The method of any one of claims 1 to 6, **characterized in that** the step of pulverizing the second dry material is carried out in a pulverizer and/or a high-speed pulverizer;
preferably, the step of pulverizing the second dry material is carried out at a rotate speed of 1500 rpm to 30000 rpm;
preferably, the powder has a particle size of 35 mesh to 200 mesh; and
preferably, a method of pressing comprises rolling.

8. The method of any one of claims 1 to 7, **characterized in that** the step of formulating the dispersion binder and the aqueous binder into the glue liquid comprises: formulating the dispersion binder and the aqueous binder into a liquid A and a liquid B, each having a mass concentration of 5wt% to 30wt%, using solvent water; and then mixing the liquid A and the liquid B, controlling a mass ratio of the dispersion binder to the aqueous binder to be (1 to 3):1, and adjusting the mass concentration to be 5wt% to 30wt% using solvent water to obtain the glue liquid; and the dispersion binder is a small molecule polymer binder; wherein the small molecule polymer binder is any one or a combination of at least two of polyvinylpyrrolidone, polyethylene oxide-polypropylene oxide-polyethylene oxide triblock copolymer, or polyethylene glycol;
the step of dry-mixing the active material, the conductive agent, and the main binder to obtain the first dry material comprises: dry-mixing the negative electrode active material, the conductive agent, and the main binder in a high-speed mixer, performing a first mixing at a first dry-mixing rotate speed firstly, performing a second mixing at a second dry-mixing rotate speed higher than the first dry-mixing rotate speed, and performing a sieving to obtain a first dry material of 8 mesh to 50 mesh; the main binder comprises polytetrafluoroethylene and/or polytetrafluoroethylene derivative;
the step of adding the glue liquid to the first dry material for dispersion, and performing the drying treatment to obtain the second dry material comprises: adding the glue liquid to the first dry material for dispersion so that a solid content of system is 70wt% to 90wt% and a ratio of a mass of the main binder in the first dry material to a total mass of the dispersion binder and the aqueous binder in the glue liquid is controlled to be (0.5 to 3):1; and performing the drying treatment for 2 h to 24 h at 0°C to 120°C to obtain a second dry material with a particle size of 8 mesh to 40 mesh; on a basis that a mass of the second dry material is 100wt%, a mass of the active material is 92wt% to 96wt%, a mass of the conductive agent is 0.5wt% to 1.5wt%, a mass of the main binder is 1wt% to 6wt%, a mass of the dispersion binder is 1wt% to 1.5wt%, and a mass of the aqueous binder is 0.5wt% to 1wt%; in the second dry material, a mass ratio of the main binder, the dispersion binder and the aqueous binder is (1 to 12):(1 to 3):1;
the step of pulverizing the second dry material to form the binder-fibrillized powder comprises: pulverizing the second dry material in a pulverizer and/or a high-speed pulverizer at 1500 rpm to 30000 rpm to form the binder-fibrillized powder, the powder has a particle size of 35 mesh to 200 mesh;
the step of pressing the powder to obtain the dry-processed electrode comprises calendering the powder using a roller press to obtain a dry-processed negative electrode.

9. A dry-processed electrode **characterized by** being obtained using the method of any one of claims 1 to 8.

10. The dry-processed electrode of claim 9, **characterized in that** the dispersion binder comprises a small molecule polymer binder; wherein the small molecule polymer binder is any one or a combination of at least two of polyvinylpyrrolidone, polyethylene oxide-polypropylene oxide-polyethylene oxide triblock copolymer, or polyethylene glycol; and
preferably, the aqueous binder comprises any one or a combination of at least two of a polyacrylic acid or a salt of the polyacrylic acid or a copolymer of the polyacrylic acid, carboxymethyl cellulose or a salt of the carboxymethyl cellulose or a copolymer of the carboxymethyl cellulose, an alginate, an SBR emulsion, or PEG.

11. The dry-processed electrode of claim 9 or 10, **characterized in that** a mass ratio of the dispersion binder to the aqueous binder in the glue liquid is (1 to 3):1;
preferably, a total mass concentration of binders in the glue liquid is 5wt% to 30wt%;
preferably, the step for formulating the dispersion binder and the aqueous binder into the glue liquid comprises: formulating the dispersion binder and the aqueous binder into a liquid A and a liquid B respectively, each having a mass concentration of 5wt% to 30wt%; and mixing the liquid A and the liquid B, and adjusting the mass concentration to 5wt% to 30wt% using a solvent to obtain the glue liquid; and
preferably, the solvent comprises water.

12. The dry-processed electrode of any one of claims 9 to 11, **characterized in that** the main binder comprises polytetrafluoroethylene and/or polytetrafluoroethylene derivative;
preferably, the polytetrafluoroethylene derivative comprises any one or a combination of at least two of a tetrafluoroethylene-hexafluoropropylene copolymer, an ethylene-tetrafluoroethylene copolymer, or a tetrafluoroethylene-perfluoroalkyl vinyl ether copolymer;
preferably, the conductive agent comprises any one or a combination of at least two of conductive carbon black, carbon nanofibers, carbon nanotubes, or graphene;
preferably, when the dry-processed electrode is a negative electrode, the active material comprises any one or a combination of at least two of graphite, silicon-carbon composite or silicon-oxygen composite.

13. The dry-processed electrode of any one of claims 9 to 12, **characterized in that** the step of dry-mixing the active material, the conductive agent, and the main binder to obtain the first dry material comprises: performing a first mixing at a first dry-mixing rotate speed firstly; and then performing a second mixing at a second dry-mixing rotate speed higher than the first dry-mixing rotate speed; preferably, the dry-mixing is carried out in a high-speed mixer with a cutter and a scraper;
preferably, under the first dry-mixing rotate speed, a rotate speed of the cutter is 1000 rpm to 30000 rpm, and a rotate speed of the scraper is 50 rpm to 1000 rpm;
preferably, under the second dry-mixing rotate speed, a rotate speed of the cutter is 1500 rpm to 30000 rpm, and a rotate speed of the scraper is 50 rpm to 1000 rpm;
preferably, a duration of the first mixing is 1 min to 60 min;
preferably, a duration of the second mixing is 1 min to 60 min; and
preferably, after the dry-mixing, a sieving is performed to obtain a first dry material of 8 mesh to 50 mesh.

14. The dry-processed electrode of any one of claims 9 to 13, **characterized in that** the glue liquid is added to the first dry material for dispersion so that a solid content of system is 70wt% to 90wt%, and a ratio of a mass of the main binder in the first dry material to a total mass of the dispersion binder and the aqueous binder in the glue liquid is controlled to be (0.5 to 3): 1;
preferably, a temperature of the drying treatment is 0°C to 120°C, and a duration of the drying treatment is 2 h to 24 h;
preferably, the second dry material has a particle size of 8 mesh to 40 mesh;
preferably, on a basis that a mass of the second dry material is 100wt%, a mass of the active material is 92wt% to 96wt%;
preferably, on a basis that a mass of the second dry material is 100wt%, a mass of the conductive agent is 0.5wt% to 1.5wt%;
preferably, on a basis that a mass of the second dry material is 100wt%, a total mass of binders is 2.5wt% to 8.5wt%;
preferably, in the second dry material, a mass ratio of the main binder, the dispersion binder, and the aqueous binder is (1 to 12) :(1 to 3):1;
preferably, on a basis that a mass of the second dry material is 100wt%, a mass of the main binder is 1wt% to 6wt%;
preferably, on a basis that a mass of the second dry material is 100wt%, a mass of the dispersion binder is 1wt% to 1.5wt%; and
preferably, on a basis that a mass of the second dry material is 100wt%, a mass of the aqueous binder is 0.5wt% to 1wt%.

15. A battery **characterized by** comprising the dry-processed electrode of claims 9 to 14.

## Patentansprüche

1. Verfahren zur Herstellung einer trocken verarbeiteten Elektrode, **dadurch gekennzeichnet, dass** es die folgenden Schritte umfasst: Formulieren eines Dispersionsbindemittels und eines wässrigen Bindemittels zu einer Klebstoffflüssigkeit;
Trockenmischen eines aktiven Materials, eines leitfähigen Mittels und eines Hauptbindemittels, um ein erstes Trockenmaterial zu erhalten;
Zugabe der Klebstoffflüssigkeit zu dem ersten Trockenmaterial zur Dispersion und Durchführung einer Trocknungsbehandlung, um ein zweites Trockenmaterial zu erhalten;
Pulverisieren des zweiten Trockenmaterials, um ein mit Bindemittel fibrilliertes Pulver zu bilden; und
Pressen des Pulvers, um eine trocken verarbeitete Elektrode zu erhalten;
wobei der Schritt des Formulierens des Dispersionsbindemittels und des wässrigen Bindemittels in die Klebstoffflüssigkeit und der Schritt des Trockenmischens des aktiven Materials, des leitfähigen Mittels und des Hauptbindemittels, um das erste trockene Material zu erhalten, in einer nicht sequentiellen Reihenfolge erfolgen.

2. Verfahren nach Anspruch 1, **dadurch gekennzeichnet, dass** das Dispersionsbindemittel ein niedermolekulares Polymerbindemittel umfasst, wobei das niedermolekulare Polymerbindemittel ein beliebiges oder eine Kombination aus mindestens zwei der folgenden Stoffe ist: Polyvinylpyrrolidon, Polyethylenoxid-Polypropylenoxid-Polyethylenoxid-Triblock-Copolymer oder Polyethylenglykol; und
das wässrige Bindemittel vorzugsweise eine oder eine Kombination von mindestens zwei der folgenden Substanzen enthält: eine Polyacrylsäure oder ein Salz der Polyacrylsäure oder ein Copolymer der Polyacrylsäure, Carboxymethylcellulose oder ein Salz der Carboxymethylcellulose oder ein Copolymer der Carboxymethylcellulose, ein Alginat, eine SBR-Emulsion oder PEG.

3. Verfahren nach Anspruch 1 oder 2, **dadurch gekennzeichnet, dass** das Massenverhältnis des Dispersionsbindemittels zum wässrigen Bindemittel in der Klebstoffflüssigkeit (1 bis 3): 1 beträgt;
die Gesamtmassenkonzentration der Bindemittel in der Klebstoffflüssigkeit vorzugsweise 5 bis 30 Gew.-% beträgt;
der Schritt des Formulierens des Dispersionsbindemittels und des wässrigen Bindemittels zu der Klebstoffflüssigkeit vorzugsweise umfasst: Formulieren des Dispersionsbindemittels und des wässrigen Bindemittels zu einer Flüssigkeit A bzw. einer Flüssigkeit B, die jeweils eine Massenkonzentration von 5 bis 30 Gew.-% aufweisen; und Mischen der Flüssigkeit A und der Flüssigkeit B und Einstellen der Massenkonzentration auf 5 bis 30 Gew.-% unter Verwendung eines Lösungsmittels, um die Klebstoffflüssigkeit zu erhalten; und
das Lösungsmittel vorzugsweise aus Wasser besteht.

4. Verfahren nach einem der Ansprüche 1 bis 3, **dadurch gekennzeichnet, dass** das Hauptbindemittel Polytetrafluorethylen und/oder ein Polytetrafluorethylen-Derivat umfasst;
das Polytetrafluorethylenderivat vorzugsweise eines oder eine Kombination von mindestens zwei aus Tetrafluorethylen-Hexafluorpropylen-Copolymeren, Ethylen-Tetrafluorethylen-Copolymeren oder Tetrafluorethylen-Perfluoralkylvinylether-Copolymeren umfasst;
das leitfähige Mittel vorzugsweise aus einem oder einer Kombination von mindestens zwei der folgenden Stoffe besteht: leitfähiger Ruß, Kohlenstoff-Nanofasern, Kohlenstoff-Nanoröhrchen oder Graphen;
wenn es sich bei der trocken verarbeiteten Elektrode um eine negative Elektrode handelt, das aktive Material vorzugsweise aus einem oder einer Kombination von mindestens zwei der folgenden Materialien besteht: Graphit, Silizium-Kohlenstoff-Verbundstoff oder Silizium-Sauerstoff-Verbundstoff.

5. Verfahren nach einem der Ansprüche 1 bis 4, **dadurch gekennzeichnet, dass** der Schritt des Trockenmischens des aktiven Materials, des leitfähigen Mittels und des Hauptbindemittels, um das erste trockene Material zu erhalten, Folgendes umfasst: Durchführen eines ersten Mischens mit einer ersten Trockenmisch-Drehgeschwindigkeit; und dann Durchführen eines zweiten Mischens mit einer zweiten Trockenmisch-Drehgeschwindigkeit, die höher ist als die erste Trockenmisch-Drehgeschwindigkeit;
das Trockenmischen vorzugsweise in einem Schnellmischer mit Messer und Abstreifer erfolgt;
bei der ersten Trockenmischdrehzahl die Drehzahl der Schneidevorrichtung vorzugsweise 1000 U/min bis 30000 U/min und die Drehzahl des Abstreifers 50 U/min bis 1000 U/min beträgt;
bei der zweiten Trockenmischdrehzahl die Drehzahl der Schneidevorrichtung vorzugsweise 1500 U/min bis 30000 U/min und die Drehzahl des Abstreifers 50 U/min bis 1000 U/min beträgt;
die Dauer des ersten Mischvorgangs 1 Minute bis 60 Minuten vorzugsweise beträgt;
die Dauer des zweiten Mischvorgangs 1 Minute bis 60 Minuten vorzugsweise beträgt; und
nach dem Trockenmischen es vorzugsweise gesiebt wird, um ein erstes trockenes Material mit 8 bis 50 Maschen zu erhalten.

6. Verfahren nach einem der Ansprüche 1 bis 5, **dadurch gekennzeichnet, dass** die Klebstoffflüssigkeit dem ersten trockenen Material zur Dispersion zugesetzt wird, so dass der Feststoffgehalt des Systems 70 bis 90 Gew.-% beträgt, und das Verhältnis der Masse des Hauptbindemittels im ersten trockenen Material zur Gesamtmasse des Dispersionsbindemittels und des wässrigen Bindemittels in der Klebstoffflüssigkeit auf (0,5 bis 3): 1 eingestellt wird;
vorzugsweise die Temperatur der Trocknungsbehandlung 0°C bis 120°C und die Dauer der Trocknungsbehandlung 2 h bis 24 h beträgt;
das zweite Trockenmaterial eine Partikelgröße vorzugsweise von 8 Mesh bis 40 Mesh hat;
vorzugsweise die Masse des zweiten Trockenmaterials 100 Gew.-% und die Masse des aktiven Materials 92 bis 96 Gew.-% beträgt;
vorzugsweise die Masse des zweiten Trockenmaterials 100 Gew.-% und die Masse des leitfähigen Mittels 0,5 Gew.-% bis 1,5 Gew.-% beträgt;
vorzugsweise die Gesamtmasse der Bindemittel 2,5 bis 8,5 Gew.-% beträgt, wenn die Masse des zweiten Trockenmaterials 100 Gew.-% beträgt;
das Massenverhältnis des Hauptbindemittels, des Dispersionsbindemittels und des wässrigen Bindemittels im zweiten Trockenmaterial vorzugsweise (1 bis 12):(1 bis 3):1 beträgt;
vorzugsweise die Masse des zweiten Trockenmaterials 100 Gew.-% und die Masse des Hauptbindemittels 1 bis 6 Gew.-% beträgt;
ausgehend von einer Masse des zweiten Trockenmaterials von 100 Gew.-%, eine Masse des Dispersionsbindemittels vorzugsweise von 1 Gew.-% bis 1,5 Gew.-% beträgt; und
vorzugsweise die Masse des zweiten trockenen Materials 100 Gew.-% und die Masse des wässrigen Bindemittels 0,5 Gew.-% bis 1 Gew.-% beträgt.

7. Verfahren nach einem der Ansprüche 1 bis 6, **dadurch gekennzeichnet, dass** der Schritt des Zerkleinerns des zweiten Trockenmaterials in einem Zerkleinerer und/oder einem Hochgeschwindigkeitszerkleinerer durchgeführt wird;
der Schritt der Zerkleinerung des zweiten Trockenmaterials vorzugsweise mit einer Drehzahl von 1500 U/min bis 30000 U/min durchgeführt wird;
das Pulver vorzugsweise eine Partikelgröße von 35 Mesh bis 200 Mesh hat; und
ein Pressverfahren vorzugsweise das Walzen umfasst.

8. Verfahren nach einem der Ansprüche 1 bis 7, **dadurch gekennzeichnet, dass** der Schritt des Formulierens des Dispersionsbindemittels und des wässrigen Bindemittels zu der Klebstoffflüssigkeit umfasst: Formulieren des Dispersionsbindemittels und des wässrigen Bindemittels zu einer Flüssigkeit A und einer Flüssigkeit B, die jeweils eine Massenkonzentration von 5 Gew.-% bis 30 Gew.-% aufweisen, unter Verwendung von Lösungsmittelwasser; und dann Mischen der Flüssigkeit A und der Flüssigkeit B, Einstellen eines Massenverhältnisses des Dispersionsbindemittels zu dem wässrigen Bindemittel auf (1 bis 3): 1, und Einstellen der Massenkonzentration auf 5 Gew.-% bis 30 Gew.-% unter Verwendung von Lösungsmittelwasser, um die Klebstoffflüssigkeit zu erhalten; und das Dispersionsbindemittel ein niedermolekulares Polymerbindemittel ist; wobei das niedermolekulare Polymerbindemittel irgendeines oder eine Kombination von mindestens zwei von Polyvinylpyrrolidon, Polyethylenoxid-Polypropylenoxid-Polyethylenoxid-Triblockcopolymer oder Polyethylenglykol ist;
der Schritt des Trockenmischens des aktiven Materials, des leitfähigen Mittels und des Hauptbindemittels, um das erste Trockenmaterial zu erhalten, umfasst: trockenmischen des aktiven Materials der negativen Elektrode, des leitfähigen Mittels und des Hauptbindemittels in einem Hochgeschwindigkeitsmischer, Durchführen eines ersten Mischens mit einer ersten Trockenmisch-Drehgeschwindigkeit, Durchführen eines zweiten Mischens mit einer zweiten Trockenmisch-Drehgeschwindigkeit, die höher ist als die erste Trockenmisch-Drehgeschwindigkeit, und Durchführen eines Siebens, um ein erstes Trockenmaterial mit 8 Mesh bis 50 Mesh zu erhalten; wobei das Hauptbindemittel Polytetrafluorethylen und/oder ein Polytetrafluorethylen-Derivat umfasst;
der Schritt des Hinzufügens der Klebstoffflüssigkeit zu dem ersten trockenen Material zur Dispersion und des Durchführens der Trocknungsbehandlung, um das zweite trockene Material zu erhalten, umfasst: Hinzufügen der Klebstoffflüssigkeit zu dem ersten trockenen Material zur Dispersion, so dass ein Feststoffgehalt des Systems 70 Gew.-% bis 90 Gew.-% beträgt und ein Verhältnis einer Masse des Hauptbindemittels in dem ersten trockenen Material zu einer Gesamtmasse des Dispersionsbindemittels und des wässrigen Bindemittels in der Klebstoffflüssigkeit so gesteuert wird, dass es (0.5 bis 3): 1 beträgt; und Durchführen der Trocknungsbehandlung für 2 h bis 24 h bei 0°C bis 120°C, um ein zweites Trockenmaterial mit einer Teilchengröße von 8 mesh bis 40 mesh zu erhalten; auf der Basis, dass eine Masse des zweiten Trockenmaterials 100 Gew.-% beträgt, eine Masse des aktiven Materials 92 Gew.-% bis 96 Gew.-%, eine Masse des leitfähigen Mittels 0,5 Gew.-% bis 1,5 Gew.-%, eine Masse des Hauptbindemittels 1 Gew.-% bis 6 Gew.-%, eine Masse des Dispersionsbindemittels 1 Gew.-% bis 1,5 Gew.-% und eine Masse des wässrigen Bindemittels 0,5 Gew.-% bis 1 Gew.-% beträgt; wobei in dem zweiten Trockenmaterial das Massenverhältnis des Hauptbindemittels, des Dispersionsbindemittels und des wässrigen Bindemittels (1 bis 12):(1 bis 3):1 beträgt;
der Schritt des Pulverisierens des zweiten trockenen Materials, um das binderfibrillierte Pulver zu bilden, umfasst: Pulverisieren des zweiten trockenen Materials in einem Pulverisierer und/oder einem Hochgeschwindigkeits-Pulverisierer bei 1500 U/min bis 30000 U/min, um das binderfibrillierte Pulver zu bilden, wobei das Pulver eine Teilchengröße von 35 mesh bis 200 mesh aufweist;
der Schritt des Pressens des Pulvers, um die trocken verarbeitete Elektrode zu erhalten, das Kalandrieren des Pulvers mit einer Walzenpresse umfasst, um eine trocken verarbeitete negative Elektrode zu erhalten.

9. Trocken verarbeitete Elektrode, **dadurch gekennzeichnet, dass** sie nach dem Verfahren nach einem der Ansprüche 1 bis 8 erhalten wurde.

10. Trocken verarbeitete Elektrode nach Anspruch 9, **dadurch gekennzeichnet, dass** das Dispersionsbindemittel ein niedermolekulares Polymerbindemittel umfasst, wobei das niedermolekulare Polymerbindemittel ein beliebiges oder eine Kombination aus mindestens zwei der folgenden Stoffe ist: Polyvinylpyrrolidon, Polyethylenoxid-Polypropylenoxid-Polyethylenoxid-Triblock-Copolymer oder Polyethylenglykol; und
das wässrige Bindemittel vorzugsweise eine oder eine Kombination von mindestens zwei der folgenden Substanzen umfasst: Polyacrylsäure oder ein Salz der Polyacrylsäure oder ein Copolymer der Polyacrylsäure, Carboxymethylcellulose oder ein Salz der Carboxymethylcellulose oder ein Copolymer der Carboxymethylcellulose, ein Alginat, eine SBR-Emulsion oder PEG.

11. Trocken verarbeitete Elektrode nach Anspruch 9 oder 10, **dadurch gekennzeichnet, dass** das Massenverhältnis des Dispersionsbindemittels zu dem wässrigen Bindemittel in der Klebstoffflüssigkeit (1 bis 3): 1 beträgt;
die Gesamtmassenkonzentration der Bindemittel in der Klebstoffflüssigkeit vorzugsweise 5 bis 30 Gew.-% beträgt;
der Schritt des Formulierens des Dispersionsbindemittels und des wässrigen Bindemittels zu der Klebstoffflüssigkeit vorzugsweise umfasst: Formulieren des Dispersionsbindemittels und des wässrigen Bindemittels zu einer Flüssigkeit A bzw. einer Flüssigkeit B, die jeweils eine Massenkonzentration von 5 bis 30 Gew.-% aufweisen; und Mischen der Flüssigkeit A und der Flüssigkeit B und Einstellen der Massenkonzentration auf 5 bis 30 Gew.-% unter Verwendung eines Lösungsmittels, um die Klebstoffflüssigkeit zu erhalten; und
das Lösungsmittel vorzugsweise aus Wasser besteht.

12. Trocken verarbeitete Elektrode nach einem der Ansprüche 9 bis 11, **dadurch gekennzeichnet, dass** das Hauptbindemittel Polytetrafluorethylen und/oder ein Polytetrafluorethylenderivat umfasst;
das Polytetrafluorethylenderivat vorzugsweise eines oder eine Kombination von mindestens zwei Tetrafluorethylen-Hexafluorpropylen-Copolymeren, Ethylen-Tetrafluorethylen-Copolymeren oder Tetrafluorethylen-Perfluoralkylvinylether-Copolymeren umfasst;
das leitfähige Mittel vorzugsweise aus einem oder einer Kombination von mindestens zwei der folgenden Stoffe besteht: leitfähiger Ruß, Kohlenstoff-Nanofasern, Kohlenstoff-Nanoröhrchen oder Graphen;
wenn es sich bei der trocken verarbeiteten Elektrode um eine negative Elektrode handelt, das aktive Material vorzugsweise aus einem oder einer Kombination von mindestens zwei der folgenden Materialien besteht: Graphit, Silizium-Kohlenstoff-Verbundstoff oder Silizium-Sauerstoff-Verbundstoff.

13. Trocken verarbeitete Elektrode nach einem der Ansprüche 9 bis 12, **dadurch gekennzeichnet, dass** der Schritt des Trockenmischens des aktiven Materials, des leitfähigen Mittels und des Hauptbindemittels, um das erste trockene Material zu erhalten, Folgendes umfasst: zunächst Durchführen eines ersten Mischens mit einer ersten Trockenmisch-Drehgeschwindigkeit; und dann Durchführen eines zweiten Mischens mit einer zweiten Trockenmisch-Drehgeschwindigkeit, die höher als die erste Trockenmisch-Drehgeschwindigkeit ist;
das Trockenmischen vorzugsweise in einem Schnellmischer mit Messer und Abstreifer erfolgt;
vorzugsweise bei der ersten Trockenmischdrehzahl die Drehzahl der Schneidevorrichtung 1000 U/min bis 30000 U/min und die Drehzahl des Abstreifers 50 U/min bis 1000 U/min beträgt;
vorzugsweise bei der zweiten Trockenmischdrehzahl die Drehzahl der Schneidevorrichtung 1500 U/min bis 30000 U/min und die Drehzahl des Abstreifers 50 U/min bis 1000 U/min beträgt;
die Dauer des ersten Mischvorgangs vorzugsweise 1 Minute bis 60 Minuten beträgt;
die Dauer des zweiten Mischens vorzugsweise 1 min bis 60 min beträgt; und
nach dem Trockenmischen es vorzugsweise gesiebt wird, um ein erstes trockenes Material mit 8 bis 50 Maschen zu erhalten.

14. Trocken verarbeitete Elektrode nach einem der Ansprüche 9 bis 13, **dadurch gekennzeichnet, dass** die Klebstoffflüssigkeit dem ersten trockenen Material zur Dispersion zugesetzt wird, so dass der Feststoffgehalt des Systems 70 bis 90 Gew.-% beträgt und das Verhältnis der Masse des Hauptbindemittels in dem ersten trockenen Material zur Gesamtmasse des Dispersionsbindemittels und des wässrigen Bindemittels in der Klebstoffflüssigkeit auf (0,5 bis 3): 1 eingestellt wird;
vorzugsweise die Temperatur der Trocknungsbehandlung 0°C bis 120°C und die Dauer der Trocknungsbehandlung 2 h bis 24 h beträgt;
das zweite Trockenmaterial vorzugsweise eine Partikelgröße von 8 Mesh bis 40 Mesh hat;
vorzugsweise die Masse des zweiten Trockenmaterials 100 Gew.-% und die Masse des aktiven Materials 92 bis 96 Gew.-% beträgt;
vorzugsweise die Masse des zweiten Trockenmaterials 100 Gew.-% und die Masse des leitfähigen Mittels 0,5 Gew.-% bis 1,5 Gew.-% beträgt;
die Gesamtmasse der Bindemittel vorzugsweise 2,5 bis 8,5 Gew.-% beträgt, wenn die Masse des zweiten Trockenmaterials 100 Gew.-% beträgt;
das Massenverhältnis des Hauptbindemittels, des Dispersionsbindemittels und des wässrigen Bindemittels im zweiten Trockenmaterial vorzugsweise (1 bis 12) : (1 bis 3):1 beträgt;
vorzugsweise die Masse des zweiten Trockenmaterials 100 Gew.-% und die Masse des Hauptbindemittels 1 bis 6 Gew.-% beträgt;
ausgehend von einer Masse des zweiten Trockenmaterials von 100 Gew.-%, eine Masse des Dispersionsbindemittels vorzugsweise von 1 Gew.-% bis 1,5 Gew.-% beträgt; und
vorzugsweise die Masse des zweiten trockenen Materials 100 Gew.-% und die Masse des wässrigen Bindemittels 0,5 Gew.-% bis 1 Gew.-% beträgt.

15. Batterie, **dadurch gekennzeichnet, dass** sie die trocken verarbeitete Elektrode nach den Ansprüchen 9 bis 14 enthält.

## Revendications

1. Méthode de fabrication d'une électrode traitée à sec, **caractérisée par** les étapes suivantes : formulation d'un liant en dispersion et d'un liant aqueux en un liquide de collage ;
le mélange à sec d'une matière active, d'un agent conducteur et d'un liant principal pour obtenir une première matière sèche ;
ajouter le liquide de collage à la première matière sèche pour la disperser, et effectuer un traitement de séchage pour obtenir une deuxième matière sèche ;
pulvériser la seconde matière sèche pour former une poudre fibrée par un liant ; et
presser la poudre pour obtenir une électrode traitée à sec ;
dans lequel l'étape de formulation du liant de dispersion et du liant aqueux dans le liquide de collage et l'étape de mélange à sec de la matière active, de l'agent conducteur et du liant principal pour obtenir le premier matériau sec se déroulent dans un ordre non séquentiel.

2. La méthode de la revendication 1, **caractérisée par le fait que** le liant de dispersion comprend un liant polymère à petites molécules ; dans laquelle le liant polymère à petites molécules est l'un ou une combinaison d'au moins deux des éléments suivants : polyvinylpyrrolidone, copolymère tribloc d'oxyde de polyéthylène et d'oxyde de polypropylène et d'oxyde de polyéthylène, ou polyéthylène glycol ; et
de préférence, le liant aqueux comprend un ou une combinaison d'au moins deux des éléments suivants : un acide polyacrylique ou un sel de l'acide polyacrylique ou un copolymère de l'acide polyacrylique, une carboxyméthylcellulose ou un sel de la carboxyméthylcellulose ou un copolymère de la carboxyméthylcellulose, un alginate, une émulsion SBR, ou un PEG.

3. Méthode de la revendication 1 ou 2, **caractérisée par le fait que** le rapport de masse entre le liant en dispersion et le liant aqueux dans le liquide de collage est de (1 à 3) : 1 ;
de préférence, la concentration totale en masse des liants dans le liquide de collage est comprise entre 5 et 30 % en poids ;
de préférence, l'étape de formulation du liant en dispersion et du liant aqueux dans le liquide de collage comprend : la formulation du liant en dispersion et du liant aqueux dans un liquide A et un liquide B respectivement, chacun ayant une concentration massique de 5 % en poids à 30 % en poids ; et le mélange du liquide A et du liquide B, et l'ajustement de la concentration massique à 5 % en poids à 30 % en poids à l'aide d'un solvant pour obtenir le liquide de collage ; et
de préférence, le solvant comprend de l'eau.

4. Procédé de l'une quelconque des revendications 1 à 3, **caractérisé par le fait que** le liant principal comprend du polytétrafluoroéthylène et/ou un dérivé de polytétrafluoroéthylène ;
de préférence, le dérivé de polytétrafluoroéthylène comprend un ou une combinaison d'au moins deux copolymères tétrafluoroéthylène-hexafluoropropylène, un copolymère éthylène-tétrafluoroéthylène ou un copolymère tétrafluoroéthylène-perfluoroalkyl-éther de vinyle ;
de préférence, l'agent conducteur comprend un ou une combinaison d'au moins deux éléments parmi le noir de carbone conducteur, les nanofibres de carbone, les nanotubes de carbone ou le graphène ;
de préférence, lorsque l'électrode traitée à sec est une électrode négative, la matière active comprend un ou une combinaison d'au moins deux des éléments suivants : graphite, composite silicium-carbone ou composite silicium-oxygène.

5. Le procédé de l'une des revendications 1 à 4, **caractérisé par le fait que** l'étape de mélange à sec de la matière active, de l'agent conducteur et du liant principal pour obtenir le premier matériau sec comprend : un premier mélange à une première vitesse de rotation du mélange à sec, puis un second mélange à une seconde vitesse de rotation du mélange à sec supérieure à la première vitesse de rotation du mélange à sec ;
de préférence, le mélange à sec est effectué dans un mélangeur à grande vitesse équipé d'un couteau et d'un racleur ;
de préférence, à la première vitesse de rotation du mélange à sec, la vitesse de rotation du couteau est comprise entre 1000 et 30000 tours/minute, et la vitesse de rotation du racleur est comprise entre 50 et 1000 tours/minute ;
de préférence, à la deuxième vitesse de rotation du mélange à sec, la vitesse de rotation du couteau est comprise entre 1500 et 30000 tours/minute, et la vitesse de rotation du racleur est comprise entre 50 et 1000 tours/minute ;
de préférence, la durée du premier mélange est comprise entre 1 min et 60 min ;
de préférence, la durée du second mélange est comprise entre 1 min et 60 min ; et
de préférence, après le mélange à sec, un tamisage est effectué pour obtenir un premier matériau sec de 8 à 50 mailles.

6. Procédé de l'une quelconque des revendications 1 à 5, **caractérisé par le fait que** le liquide de collage est ajouté à la première matière sèche à disperser de manière à ce que la teneur en matière solide du système soit comprise entre 70 et 90 % en poids, et que le rapport entre la masse du liant principal dans la première matière sèche et la masse totale du liant de dispersion et du liant aqueux dans le liquide de collage est contrôlé de manière à être compris entre 0,5 et 3 : 1 ;
de préférence, la température du traitement de séchage est comprise entre 0°C et 120°C, et la durée du traitement de séchage est comprise entre 2 h et 24 h ;
de préférence, la seconde matière sèche a une taille de particules comprise entre 8 et 40 mesh ; de préférence, sur la base d'une masse de la seconde matière sèche de 100 %, la masse de la matière active est comprise entre 92 % et 96 % ;
de préférence, sur la base d'une masse de 100 % de la seconde matière sèche, la masse de l'agent conducteur est comprise entre 0,5 % et 1,5 % en poids ;
de préférence, sur la base d'une masse de 100 % de la seconde matière sèche, la masse totale de liants est comprise entre 2,5 % et 8,5 % ;
de préférence, dans le deuxième matériau sec, le rapport massique entre le liant principal, le liant de dispersion et le liant aqueux est de (1 à 12) : (1 à 3) : 1 ;
de préférence, sur la base d'une masse de 100 % de la seconde matière sèche, la masse du liant principal est comprise entre 1 % et 6 % ;
de préférence, sur la base d'une masse de la seconde matière sèche de 100 % en poids, une masse du liant de dispersion de 1 % en poids à 1,5 % en poids ; et
de préférence, sur la base d'une masse de 100 % de la seconde matière sèche, la masse du liant aqueux est comprise entre 0,5 % et 1 % en poids.

7. Le procédé de l'une des revendications 1 à 6, **caractérisé par le fait que** l'étape de pulvérisation de la seconde matière sèche est effectuée dans un pulvérisateur et/ou un pulvérisateur à grande vitesse ;
de préférence, l'étape de pulvérisation de la seconde matière sèche est effectuée à une vitesse de rotation de 1500 tr/min à 30000 tr/min ;
de préférence, la poudre a une granulométrie comprise entre 35 et 200 mesh ; et
de préférence, une méthode de pressage comprend le laminage.

8. Le procédé de l'une quelconque des revendications 1 à 7, **caractérisé en ce que** l'étape de formulation du liant de dispersion et du liant aqueux dans le liquide de collage comprend : la formulation du liant de dispersion et du liant aqueux dans un liquide A et un liquide B, chacun ayant une concentration massique de 5 % en poids à 30 % en poids, en utilisant de l'eau de solvant ; et ensuite le mélange du liquide A et du liquide B, le contrôle d'un rapport de masse du liant de dispersion au liant aqueux pour être (1 à 3) : 1, et en ajustant la concentration massique pour qu'elle soit comprise entre 5 et 30 % en utilisant de l'eau dissolvante pour obtenir le liquide de collage ; et le liant de dispersion est un liant polymère à petites molécules ; dans lequel le liant polymère à petites molécules est l'un ou une combinaison d'au moins deux des éléments suivants : polyvinylpyrrolidone, copolymère tribloc d'oxyde d'éthylène, d'oxyde de polypropylène et d'oxyde de polyéthylène, ou polyéthylène glycol ;
l'étape de mélange à sec du matériau actif, de l'agent conducteur et du liant principal pour obtenir le premier matériau sec comprend : le mélange à sec du matériau actif de l'électrode négative, de l'agent conducteur et du liant principal dans un mélangeur à grande vitesse, un premier mélange à une première vitesse de rotation du mélange à sec, un deuxième mélange à une deuxième vitesse de rotation du mélange à sec supérieure à la première vitesse de rotation du mélange à sec, et un tamisage pour obtenir un premier matériau sec de 8 à 50 mailles ; le liant principal comprend du polytétrafluoroéthylène et/ou un dérivé de polytétrafluoroéthylène ;
l'étape consistant à ajouter le liquide de collage au premier matériau sec pour la dispersion et à effectuer le traitement de séchage pour obtenir le deuxième matériau sec comprend : l'ajout du liquide de collage au premier matériau sec pour la dispersion de sorte qu'une teneur en matière solide du système est de 70 % en poids à 90 % en poids et un rapport d'une masse du liant principal dans le premier matériau sec à une masse totale du liant de dispersion et du liant aqueux dans le liquide de collage est contrôlé pour être de (0.5 à 3) : 1 ; et effectuer le traitement de séchage pendant 2 h à 24 h entre 0°C et 120°C pour obtenir un second matériau sec avec une taille de particule de 8 mesh à 40 mesh ; sur la base qu'une masse du second matériau sec est de 100 % en poids, une masse du matériau actif est de 92 % en poids à 96 % en poids, une masse de l'agent conducteur est de 0.5 % en poids à 1.5 % en poids, une masse de liant principal de 1 % en poids à 6 % en poids, une masse de liant de dispersion de 1 % en poids à 1.5 % en poids, et une masse de liant aqueux de 0,5 % en poids à 1 % en poids ; dans le second matériau sec, un rapport de masse du liant principal, du liant de dispersion et du liant aqueux est de (1 à 12) :(1 à 3):1 ;
l'étape consistant à pulvériser la seconde matière sèche pour former la poudre fibrée par le liant comprend : la pulvérisation de la seconde matière sèche dans un pulvérisateur et/ou un pulvérisateur à grande vitesse à 1500 tours par minute à 30000 tours par minute pour former la poudre fibrée par le liant, la poudre ayant une taille de particules de 35 mesh à 200 mesh ;
l'étape consistant à presser la poudre pour obtenir l'électrode traitée à sec consiste à calandrer la poudre à l'aide d'une presse à rouleaux pour obtenir une électrode négative traitée à sec.

9. Electrode traitée à sec, **caractérisée par le fait qu'**elle est obtenue par le procédé de l'une quelconque des revendications 1 à 8.

10. L'électrode traitée à sec de la revendication 9, **caractérisée par le fait que** le liant de dispersion comprend un liant polymère à petites molécules, dans lequel le liant polymère à petites molécules est l'un ou une combinaison d'au moins deux des éléments suivants : polyvinylpyrrolidone, copolymère tribloc d'oxyde de polyéthylène et d'oxyde de polypropylène et d'oxyde de polyéthylène, ou polyéthylène glycol ; et
de préférence, le liant aqueux comprend un ou une combinaison d'au moins deux des éléments suivants : un acide polyacrylique ou un sel de l'acide polyacrylique ou un copolymère de l'acide polyacrylique, une carboxyméthylcellulose ou un sel de la carboxyméthylcellulose ou un copolymère de la carboxyméthylcellulose, un alginate, une émulsion SBR ou un PEG.

11. Électrode traitée à sec selon la revendication 9 ou 10, **caractérisée par le fait que** le rapport de masse entre le liant en dispersion et le liant aqueux dans le liquide de collage est de (1 à 3) : 1 ;
de préférence, la concentration totale en masse des liants dans le liquide de collage est comprise entre 5 et 30 % en poids ;
de préférence, l'étape de formulation du liant en dispersion et du liant aqueux dans le liquide de collage comprend : la formulation du liant en dispersion et du liant aqueux dans un liquide A et un liquide B respectivement, chacun ayant une concentration massique de 5 % en poids à 30 % en poids ; et le mélange du liquide A et du liquide B, et l'ajustement de la concentration massique à 5 % en poids à 30 % en poids à l'aide d'un solvant pour obtenir le liquide de collage ; et
de préférence, le solvant comprend de l'eau.

12. Électrode traitée à sec selon l'une des revendications 9 à 11, **caractérisée par le fait que** le liant principal comprend du polytétrafluoroéthylène et/ou un dérivé de polytétrafluoroéthylène ;
de préférence, le dérivé de polytétrafluoroéthylène comprend un ou une combinaison d'au moins deux copolymères tétrafluoroéthylène-hexafluoropropylène, un copolymère éthylène-tétrafluoroéthylène ou un copolymère tétrafluoroéthylène-perfluoroalkyl-éther de vinyle ;
de préférence, l'agent conducteur comprend un ou une combinaison d'au moins deux éléments parmi le noir de carbone conducteur, les nanofibres de carbone, les nanotubes de carbone ou le graphène ;
de préférence, lorsque l'électrode traitée à sec est une électrode négative, la matière active comprend un ou une combinaison d'au moins deux des éléments suivants : graphite, composite silicium-carbone ou composite silicium-oxygène.

13. L'électrode traitée à sec de l'une des revendications 9 à 12, **caractérisée par le fait que** l'étape de mélange à sec du matériau actif, de l'agent conducteur et du liant principal pour obtenir le premier matériau sec comprend : un premier mélange à une première vitesse de rotation du mélange à sec, puis un second mélange à une seconde vitesse de rotation du mélange à sec supérieure à la première vitesse de rotation du mélange à sec ;
de préférence, le mélange à sec est effectué dans un mélangeur à grande vitesse équipé d'un couteau et d'un racleur ;
de préférence, à la première vitesse de rotation du mélange à sec, la vitesse de rotation du couteau est comprise entre 1000 et 30000 tours/minute, et la vitesse de rotation du racleur est comprise entre 50 et 1000 tours/minute ;
de préférence, à la deuxième vitesse de rotation du mélange à sec, la vitesse de rotation du couteau est comprise entre 1500 et 30000 tours/minute, et la vitesse de rotation du racleur est comprise entre 50 et 1000 tours/minute ;
de préférence, la durée du premier mélange est comprise entre 1 min et 60 min ;
de préférence, la durée du second mélange est comprise entre 1 min et 60 min et ;
de préférence, après le mélange à sec, un tamisage est effectué pour obtenir un premier matériau sec de 8 à 50 mailles.

14. L'électrode traitée à sec de l'une des revendications 9 à 13, **caractérisée par le fait que** le liquide de collage est ajouté au premier matériau sec pour la dispersion de sorte que la teneur en matières solides du système soit comprise entre 70 et 90 %, et que le rapport entre la masse du liant principal dans le premier matériau sec et la masse totale du liant de dispersion et du liant aqueux dans le liquide de collage soit contrôlé pour être de (0,5 à 3) : 1 ;
de préférence, la température du traitement de séchage est comprise entre 0°C et 120°C, et la durée du traitement de séchage est comprise entre 2 h et 24 h ;
de préférence, la seconde matière sèche a une taille de particules comprise entre 8 et 40 mesh ; de préférence, sur la base d'une masse de la seconde matière sèche de 100 %, la masse de la matière active est comprise entre 92 % et 96 % ;
de préférence, sur la base d'une masse de 100 % de la seconde matière sèche, la masse de l'agent conducteur est comprise entre 0,5 % et 1,5 % en poids ;
de préférence, sur la base d'une masse de 100 % de la seconde matière sèche, la masse totale des liants est comprise entre 2,5 % et 8,5 % ;
de préférence, dans le deuxième matériau sec, le rapport massique entre le liant principal, le liant de dispersion et le liant aqueux est de (1 à 12) : (1 à 3) : 1 ;
de préférence, sur la base d'une masse de 100 % de la seconde matière sèche, la masse du liant principal est de 1 % en poids à 6 % en poids ;
de préférence, sur la base d'une masse de la seconde matière sèche de 100 % en poids, une masse du liant de dispersion de 1 % en poids à 1,5 % en poids ; et
de préférence, sur la base d'une masse de 100 % de la seconde matière sèche, la masse du liant aqueux est comprise entre 0,5 % et 1 % en poids.

15. Batterie **caractérisée par le fait qu'**elle comprend l'électrode traitée à sec des revendications 9 à 14.
